# EUROPEAN PATENT APPLICATION

(11) **EP 4 171 131 A1**
(43) Date of publication of application: **26.04.2023**
(21) Application number: 22202503.3
(22) Date of filing: 19.10.2022
(51) Int. Cl.: H04W 48/20, H04W 72/21, H04W 72/51, H04W 48/12, H04W 48/16, H04W 88/06, H04W 48/18

(54) **ALTERNATIVE DETECTION OF MULTI-BAND ELECTRONIC DEVICES**

(30) Priority: 22.10.2021 US 202163270608 P
(71) Applicant: ARRIS Enterprises LLC, Suwanee, GA 30024 (US)
(72) Inventor: KHOURY, Peter G., San Francisco, 94110 (US)
(74) Representative: Openshaw & Co.

(57) **Abstract**

An access point that determines whether an electronic device has multi-band capability is described. During operation, the access point may receive a packet or a frame associated with the electronic device. For example, the access point may determine that the electronic device has the multi-band capability based at least in part on: an operating class of the electronic device; a model of the electronic device; and/or a vendor of the electronic device. Then, based at least in part on information included in the packet or the frame, the access point may determine whether the electronic device has the multi-band capability. Moreover, the access point may selectively provide a transition recommendation addressed to the electronic device based at least in part on the determined multi-band capability.

## Description

### BACKGROUND

### Field

The described embodiments relate to techniques for determining that an electronic device is capable of communication in multiple bands of frequencies.

### Related Art

Many electronic devices are capable of wirelessly communicating with other electronic devices. Notably, these electronic devices can include a networking subsystem that implements a network interface for: a cellular network (UMTS, LTE, etc.), a wireless local area network (e.g., a wireless network such as described in the Institute of Electrical and Electronics Engineers (IEEE) 802.11 standard or Bluetooth from the Bluetooth Special Interest Group of Kirkland, Washington), and/or another type of wireless network. For example, many electronic devices communicate with each other via wireless local area networks (WLANs) using an IEEE 802.11-compatible communication protocol (which is sometimes collectively referred to as 'Wi-Fi'). In a typical deployment, a Wi-Fi-based WLAN includes one or more access points (or basic service sets or BSSs) that communicate wirelessly with each other and with other electronic devices using Wi-Fi, and that provide access to another network (such as the Internet) via IEEE 802.3 (which is sometimes referred to as 'Ethernet').

Recently, IEEE 802.11ax extended Wi-Fi to a 6 GHz band of frequencies, which is in addition to existing coverage in the 2.4 GHz and 5 GHz bands of frequencies. However, it is often difficult to determine whether an electronic device that is associated with an access point in a WLAN (which is sometimes referred to as a 'station' or a 'client') is capable of communicating in the 6 GHz band of frequencies.

Historically, packets or frames that were transmitted by a client contained a stable media access control (MAC) address that did not change over time, even as the client roamed between WLANs or access points. This stable MAC address provided an identifier that was used to determine whether the client was dual-band capable (such as whether the client couple operate in both 2.4 GHz and 5 GHz bands of frequencies). Notably, when the MAC address of a client that was received in one band of frequencies matched the MAC address received in a different band of frequencies, the access point knew that the client was dual-band capable. With this information, the access point could provide between service to the client, e.g., by steering the client (such as by providing a transition recommendation) to a less congested alternative band of frequencies.

However, recently clients have implemented MAC randomization. Notably, a client may make their transmissions more anonymous by frequently changing their MAC addresses. For example, clients may change their MAC address periodically or when they change WLAN. This variation of the MAC address of a client as a function of time, makes it more difficult, if not impossible, for an access point to determine which clients have dual-band capability. In turn, this makes it more difficult for the access point to improve service to the client by providing a transition recommendation to an alternative band of frequencies.

### SUMMARY

The invention is set out in the appended set of claims.

An access point that determines whether an electronic device has multi-band capability is described. This access point may include an interface circuit that communicates with the electronic device. During operation, the access point receives a packet or a frame associated with the electronic device. Then, based at least in part on information included in the packet or the frame, the access point determines whether the electronic device has the multi-band capability.

Note that the access point may determine that the electronic device has the multi-band capability based at least in part on an operating class of the electronic device. For example, the access point may determine that the electronic device has the multi-band capability based at least in part on bands of frequencies associated with the operating class. In some embodiments, the packet or the frame may include an association request frame, and the operating class may be specified by an operating classes information element in the association request frame.

Alternatively or additionally, the access point may determine that the electronic device has the multi-band capability based at least in part on a model of the electronic device and/or a vendor of the electronic device. For example, predefined or predetermined band capability of the model may indicate that the electronic device has multi-band capability. Furthermore, predefined or predetermined band capabilities of one or more electronic devices associated with the vendor may indicate that the electronic devices only have the multi-band capability. In some embodiments, the packet or the frame may include an association request frame, and the vendor may be specified by an organizationally unique identifier information element in the association request frame. In these embodiments, the association request frame may not include the operating classes information element.

Furthermore, in some embodiments, the access point may provide, addressed to a computer (such as a controller), third information specifying a band capability of the electronic device. Alternatively or additionally, the access point may receive, associated with the computer, the third information specifying the predefined or predetermined band capability of the electronic device.

Additionally, the access point may selectively provide a transition recommendation addressed to the electronic device based at least in part on the determined multi-band capability. For example, the transition recommendation may recommend that the electronic device transition from a first band of frequencies to a second band of frequencies (such as from 2.4 GHz or 5 GHz or to 6 GHz). In some embodiments, the transition recommendation includes a basic service set (BSS) transition.

Another embodiment provides the electronic device.

Another embodiment provides the second electronic device.

Another embodiment provides a computer-readable storage medium with program instructions for use with the access point. When executed by the access point, the program instructions cause the access point to perform at least some of the aforementioned operations in one or more of the preceding embodiments.

Another embodiment provides a method, which may be performed by the access point. This method includes at least some of the aforementioned operations in one or more of the preceding embodiments.

This Summary is provided for purposes of illustrating some exemplary embodiments, so as to provide a basic understanding of some aspects of the subject matter described herein. Accordingly, it will be appreciated that the above-described features are examples and should not be construed to narrow the scope of the subject matter described herein in any way. Other features, aspects, and advantages of the subject matter described herein will become apparent from the following Detailed Description, Figures, and Claims.

### BRIEF DESCRIPTION OF THE FIGURES

FIG. 1 is a block diagram illustrating an example of communication among electronic devices in accordance with an embodiment of the present disclosure.
FIG. 2 is a flow diagram illustrating an example of a method for determining whether an electronic device has multi-band capability using an access point in FIG. 1 in accordance with an embodiment of the present disclosure.
FIG. 3 is a drawing illustrating an example of communication among an electronic device and an access point in FIG. 1 in accordance with an embodiment of the present disclosure.
FIG. 4 is a block diagram illustrating an example of an electronic device in accordance with an embodiment of the present disclosure.

Note that like reference numerals refer to corresponding parts throughout the drawings. Moreover, multiple instances of the same part are designated by a common prefix separated from an instance number by a dash.

### DETAILED DESCRIPTION

An access point that determines whether an electronic device has multi-band capability is described. During operation, the access point may receive a packet or a frame associated with the electronic device. For example, the access point may determine that the electronic device has the multi-band capability based at least in part on: an operating class of the electronic device; a model of the electronic device; and/or a vendor of the electronic device. Then, based at least in part on information included in the packet or the frame, the access point may determine whether the electronic device has the multi-band capability. Moreover, the access point may selectively provide a transition recommendation addressed to the electronic device based at least in part on the determined multi-band capability.

By determining whether the electronic device has the multi-band capability, these communication techniques may provide improved communication performance. Notably, the communication techniques may allow the access point to selectively provide steering recommendations to the electronic device, such as to a less-congested band of frequencies. Consequently, the communication techniques may improve the user experience when communicating with the access point and/or in a network that includes the access point.

In the discussion that follows, electronic devices or components in a system communicate packets in accordance with a wireless communication protocol, such as: a wireless communication protocol that is compatible with an IEEE 802.11 standard (which is sometimes referred to as 'Wi-Fi^{®},' from the Wi-Fi Alliance of Austin, Texas), Bluetooth, a cellular-telephone network or data network communication protocol (such as a third generation or 3G communication protocol, a fourth generation or 4G communication protocol, e.g., Long Term Evolution or LTE (from the 3rd Generation Partnership Project of Sophia Antipolis, Valbonne, France), LTE Advanced or LTE-A, a fifth generation or 5G communication protocol, or other present or future developed advanced cellular communication protocol), and/or another type of wireless interface (such as another wireless-local-area-network interface). For example, an IEEE 802.11 standard may include one or more of: IEEE 802.11a, IEEE 802.11b, IEEE 802.11g, IEEE 802.11-2007, IEEE 802.11n, IEEE 802.11-2012, IEEE 802.11-2016, IEEE 802.11ac, IEEE 802.11ax, IEEE 802.11ba, IEEE 802.11be, or other present or future developed IEEE 802.11 technologies. Moreover, an access point, a radio node, a base station or a switch in the wireless network may communicate with a local or remotely located computer (such as a controller) using a wired communication protocol, such as a wired communication protocol that is compatible with an IEEE 802.3 standard (which is sometimes referred to as 'Ethernet'), e.g., an Ethernet II standard. However, a wide variety of communication protocols may be used in the system, including wired and/or wireless communication. In the discussion that follows, Wi-Fi, LTE and Ethernet are used as illustrative examples.

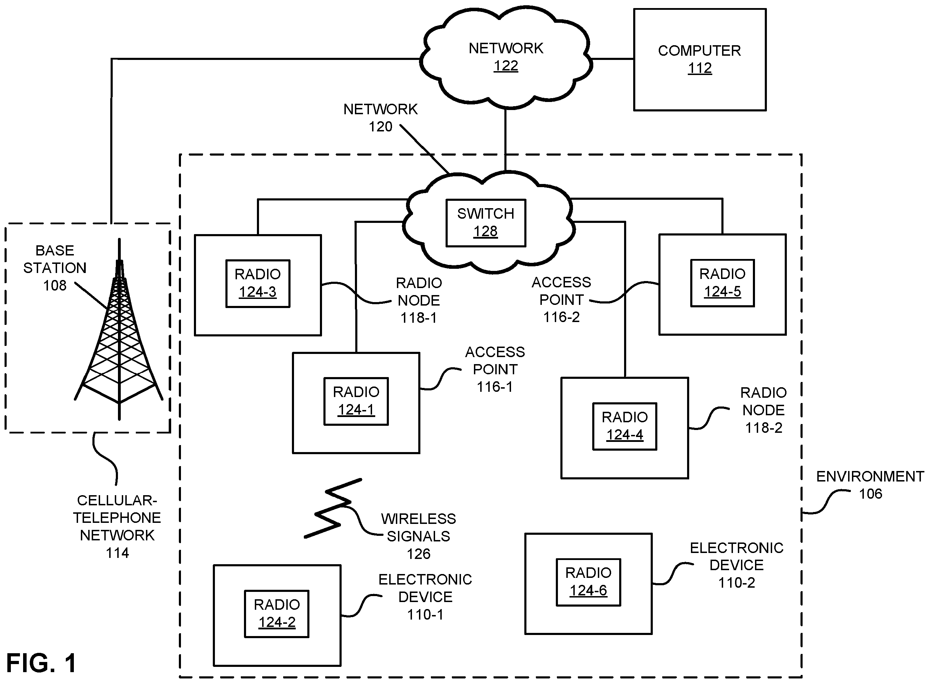

We now describe some embodiments of the communication techniques. FIG. 1 presents a block diagram illustrating an example of communication in an environment 106 with one or more electronic devices 110 (such as cellular telephones, portable electronic devices, stations or clients, another type of electronic device, etc., which are sometimes referred to as 'end devices') via a cellular-telephone network 114 (which may include a base station 108), one or more access points 116 (which may communicate using Wi-Fi) in a WLAN and/or one or more radio nodes 118 (which may communicate using LTE) in a small-scale network (such as a small cell). For example, the one or more radio nodes 118 may include: an Evolved Node B (eNodeB), a Universal Mobile Telecommunications System (UMTS) NodeB and radio network controller (RNC), a New Radio (NR) gNB or gNodeB (which communicates with a network with a cellular-telephone communication protocol that is other than LTE), etc. In the discussion that follows, an access point, a radio node or a base station are sometimes referred to generically as a 'communication device.' Moreover, one or more base stations (such as base station 108), access points 116, and/or radio nodes 118 may be included in one or more wireless networks, such as: a WLAN, a small cell, and/or a cellular-telephone network. In some embodiments, access points 116 may include a physical access point and/or a virtual access point that is implemented in software in an environment of an electronic device or a computer.

Note that access points 116 and/or radio nodes 118 may communicate with each other and/or computer 112 (which may be a local or a cloud-based controller that manages and/or configures access points 116, radio nodes 118 and/or switch 128, or that provides cloud-based storage and/or analytical services) using a wired communication protocol (such as Ethernet) via network 120 and/or 122. Note that networks 120 and 122 may be the same or different networks. For example, networks 120 and/or 122 may an LAN, an intra-net or the Internet. In some embodiments, network 120 may include one or more routers and/or switches (such as switch 128).

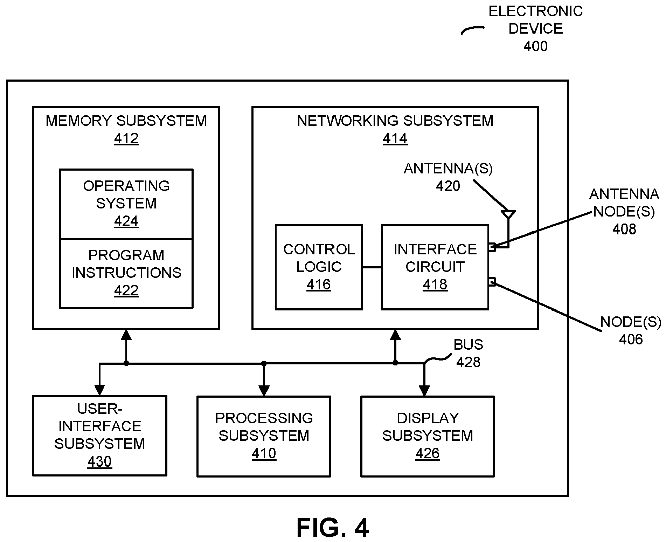

As described further below with reference to FIG. 4, electronic devices 110, computer 112, access points 116, radio nodes 118 and switch 128 may include subsystems, such as a networking subsystem, a memory subsystem and a processor subsystem. In addition, electronic devices 110, access points 116 and radio nodes 118 may include radios 124 in the networking subsystems. More generally, electronic devices 110, access points 116 and radio nodes 118 can include (or can be included within) any electronic devices with the networking subsystems that enable electronic devices 110, access points 116 and radio nodes 118 to wirelessly communicate with one or more other electronic devices. This wireless communication can comprise transmitting access on wireless channels to enable electronic devices to make initial contact with or detect each other, followed by exchanging subsequent data/management frames (such as connection requests and responses) to establish a connection, configure security options, transmit and receive frames or packets via the connection, etc.

During the communication in FIG. 1, access points 116 and/or radio nodes 118 and electronic devices 110 may wired or wirelessly communicate while: transmitting access requests and receiving access responses on wireless channels, detecting one another by scanning wireless channels, establishing connections (for example, by transmitting connection requests and receiving connection responses), and/or transmitting and receiving frames or packets (which may include information as payloads).

As can be seen in FIG. 1, wireless signals 126 (represented by a jagged line) may be transmitted by radios 124 in, e.g., access points 116 and/or radio nodes 118 and electronic devices 110. For example, radio 124-1 in access point 116-1 may transmit information (such as one or more packets or frames) using wireless signals 126. These wireless signals are received by radios 124 in one or more other electronic devices (such as radio 124-2 in electronic device 110-1). This may allow access point 116-1 to communicate information to other access points 116 and/or electronic device 110-1. Note that wireless signals 126 may convey one or more packets or frames.

In the described embodiments, processing a packet or a frame in access points 116 and/or radio nodes 118 and electronic devices 110 may include: receiving the wireless signals with the packet or the frame; decoding/extracting the packet or the frame from the received wireless signals to acquire the packet or the frame; and processing the packet or the frame to determine information contained in the payload of the packet or the frame.

Note that the wireless communication in FIG. 1 may be characterized by a variety of performance metrics, such as: a data rate for successful communication (which is sometimes referred to as 'throughput'), an error rate (such as a retry or resend rate), a mean-squared error of equalized signals relative to an equalization target, intersymbol interference, multipath interference, a signal-to-noise ratio, a width of an eye pattern, a ratio of number of bytes successfully communicated during a time interval (such as 1-10 s) to an estimated maximum number of bytes that can be communicated in the time interval (the latter of which is sometimes referred to as the 'capacity' of a communication channel or link), and/or a ratio of an actual data rate to an estimated data rate (which is sometimes referred to as 'utilization'). While instances of radios 124 are shown in components in FIG. 1, one or more of these instances may be different from the other instances of radios 124.

In some embodiments, wireless communication between components in FIG. 1 uses one or more bands of frequencies, such as: 900 MHz, 2.4 GHz, 5 GHz, 6 GHz, 60 GHz, the Citizens Broadband Radio Spectrum or CBRS (e.g., a frequency band near 3.5 GHz), and/or a band of frequencies used by LTE or another cellular-telephone communication protocol or a data communication protocol. Note that the communication between electronic devices may use multi-user transmission (such as orthogonal frequency division multiple access or OFDMA).

Although we describe the network environment shown in FIG. 1 as an example, in alternative embodiments, different numbers or types of electronic devices may be present. For example, some embodiments comprise more or fewer electronic devices. As another example, in another embodiment, different electronic devices are transmitting and/or receiving packets or frames.

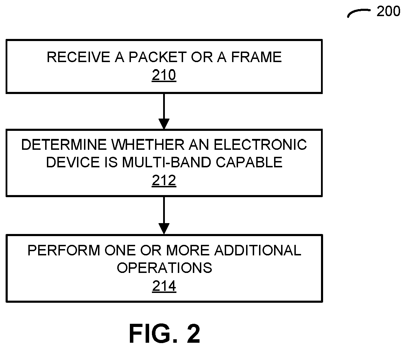

As discussed previously, because of MAC randomization, it is difficult determine whether an electronic device (such as electronic device 110-1) has multi-band capability (such as the ability to operate in at least two of the 2.4, 5 and/or 6 GHz bands of frequencies). Moreover, as described further below with reference to FIGs. 2-3, in order to address this problem an access point (such as access point 116-1) may determine whether electronic device 110-1 has multi-band capability based at least in part on information included in a packet or a frame received from electronic device 110-1.

Notably, access point 116-1 may determine that electronic device 110-1 has the multi-band capability based at least in part on an operating class of electronic device 110-1. For example, access point 116-1 may determine that electronic device 110-1 has the multi-band capability based at least in part on bands of frequencies associated with the operating class. In some embodiments, the packet or the frame may include an association request frame, and the operating class may be specified by an operating classes information element in the association request frame. However, in other embodiments, the packet or frame may be a different type of packet or frame than an association request, such as another type of management packet or frame (e.g., a probe request) or a data packet or frame.

Alternatively or additionally, access point 116-1 may determine that electronic device 110-1 has the multi-band capability based at least in part on a model of electronic device 110-1 and/or a vendor of electronic device 110-1. For example, a predefined or predetermined band capability of the model may indicate whether or not the model has the multi-band capability. Furthermore, predefined or predetermined band capabilities of one or more electronic devices (such as electronic device 110-1) associated with the vendor may indicate whether or not the electronic devices have the multi-band capability, such as that the electronic devices only have the multi-band capability. In some embodiments, the packet or the frame may include an association request frame, and the vendor may be specified by an organizationally unique identifier information element in the association request frame. In these embodiments, the association request frame may not include the operating classes information element. However, once again, in other embodiments the packet or frame may be a different type of packet or frame than an association request, such as another type of management packet or frame (e.g., a probe request) or a data packet or frame.

For example, after receiving the packet or the frame and extracting the information included in the packet or frame, access point 116-1 may access the predefined or predetermined band capability or capabilities stored in memory and may compare the information in the packet or the frame with the stored information to determine that electronic device 110-1 has the multi-band capability. In some embodiments, the stored information may include a look-up table with one or more operating classes, models and/or vendors, and may indicate the band capabilities associated with the one or more operating classes, models and/or vendors. In these embodiments, access point 116-1 may perform a look up based at least in part on the information in the packet or the frame to determine the band capability of electronic device 110-1 (such as whether or not electronic device 110-1 is capable of communicating in a given band of frequencies). Thus, different operating classes may use or may be associated with different channels in different bands of frequencies, and by looking up the one or more bands of frequencies associated with the operating class of electronic device 110-1, access point 116-1 may determine whether electronic device 110-1 has the multi-band capability.

Note that, in some embodiments, the communication techniques are facilitated by computer 112. For example, when a given access point (such as access point 116-2) determines that electronic device 110-1 has the multi-band capability, access point 116-2 may provide band-capability information (which may include the predetermined band capability of electronic device 110-1, and optionally information specifying a model, a vendor of electronic device 110-1 and/or an identifier of electronic device 110-1, such as a MAC address, a serial number or, more generally, an identifier of electronic device 110-1) specifying this determination to computer 112, which may provide this band-capability information to one or more other access points, such as access point 116-1. Alternatively or additionally, computer 112 may provide band-capability information associated with one or more models and/or one or more vendors (which may include the predefined band capability of electronic device 110-1) to one or more access points 116, such as access point 116-1. Therefore, the band-capability information may be dynamically determined by one or more access points 116 and/or may include pre-existing knowledge about the model and/or the vendor. Moreover, access point 116-1 may store the band-capability information in memory. Subsequently, when electronic device 110-1 provides the packet or the frame to access point 116-1, access point 116-1 may use the information in the packet of the frame and the stored band-capability information to determine whether electronic device 110-1 has the multi-band capability.

When access point determines that electronic device 110-1 has the multi-band capability, access point 116-1 may selectively provide a transition recommendation addressed to electronic device 110-1. For example, the transition recommendation may recommend that electronic device 110-1 transition from a first band of frequencies to a second band of frequencies (such as from 2.4 GHz or 5 GHz or to 6 GHz). In some embodiments, the transition recommendation includes a BSS transition.

In these ways, the communication techniques may allow access point 116-1 to determine whether electronic device 110-1 has the multi-band capability and to use this information to selectively improve the communication performance (such as the throughput) provided to electronic device 110-1. Consequently, the communication techniques may improve the user experience when communicating with access point 116-1 and, more generally, with a network that includes access point 116-1.

While the preceding embodiments illustrated the communication techniques being performed by access point 116-1, in other embodiments at least some of the operations in the communication techniques are performed by computer 112. For example, access point 116-1 may provide the information included in the packet or the frame to computer 112, and computer 112 may respond with the band capability of electronic device 110-1 or an indication as to whether or not electronic device 110-1 has the multi-band capability. Thus, the communication techniques may be implemented in a centralized and/or a distributed manner.

We now describe embodiments of the method. FIG. 2 presents a flow diagram illustrating an example of a method 200 for determining whether an electronic device has multi-band capability, which may be performed by an access point (such as one of access points 116 and, more generally, one of radio nodes 118 or switch 128 in FIG. 1). During operation, the access point may receive a packet or a frame (operation 210) associated with the electronic device. Then, based at least in part on information included in the packet or the frame, the access point may determine whether the electronic device has the multi-band capability (operation 212).

Notably, the access point may determine that the electronic device has the multi-band capability (operation 212) based at least in part on an operating class of the electronic device. For example, the access point may determine that the electronic device has the multi-band capability (operation 212) based at least in part on bands of frequencies associated with the operating class. In some embodiments, the packet or the frame may include an association request frame, and the operating class may be specified by an operating classes information element in the association request frame.

Alternatively or additionally, the access point may determine that the electronic device has the multi-band capability (operation 212) based at least in part on a model of the electronic device and/or a vendor of the electronic device. For example, a predefined or predetermined band capability of the model may indicate that the electronic device has the multi-band capability. Furthermore, predefined or predetermined band capabilities of one or more electronic devices associated with the vendor may indicate that the electronic devices only have the multi-band capability. In some embodiments, the packet or the frame may include an association request frame, and the vendor may be specified by an organizationally unique identifier information element in the association request frame. In these embodiments, the association request frame may not include the operating classes information element.

In some embodiments, the access point may optionally perform one or more additional operations (operation 214). For example, in some embodiments, the access point may provide, addressed to a computer (such as a controller), third information specifying a band capability of the electronic device. Alternatively or additionally, the access point may receive, associated with the computer, the third information specifying the predefined or predetermined band capability of the electronic device.

Moreover, the access point may selectively provide a transition recommendation addressed to the electronic device based at least in part on the determined multi-band capability. For example, the transition recommendation may recommend that the electronic device transition from a first band of frequencies to a second band of frequencies (such as from 2.4 GHz or 5 GHz or to 6 GHz). In some embodiments, the transition recommendation includes a BSS transition.

In some embodiments of method 200, there may be additional or fewer operations. Furthermore, the order of the operations may be changed, and/or two or more operations may be combined into a single operation.

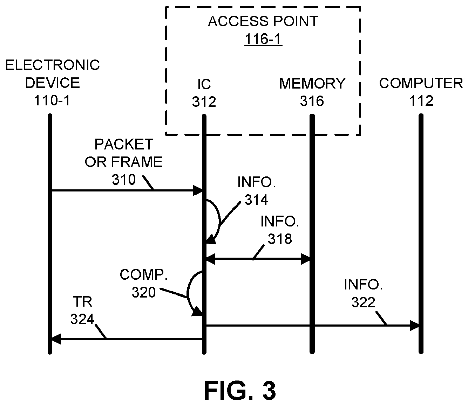

Embodiments of the communication techniques are further illustrated in FIG. 3, which presents a drawing illustrating an example of communication among electronic device 110-1, access point 116-1 and optionally computer 112. In FIG. 3, an interface circuit in electronic device 110-1 may provide a packet or frame 310 in a channel in a first band of frequencies (such as the 2.4 GHz and/or the 5 GHz bands of frequencies) to access point 116-1. Then, an interface circuit (IC) 312 in access point 116-1 that operates in the first band of frequencies may receive packet or frame 310.

Based at least in part on information 314 included in packet or frame 310, interface circuit 312 may determine that electronic device 110-1 has multi-band capability. During the determination, interface circuit 312 may access, in memory 316 in access point 116-1, information 318 that specifies bands of frequencies associated with operating classes, a model of electronic device 110-1 and/or a vendor of electronic device 110-1. Then, during the determining, interface circuit 312 may compare 320 information 314 and information 318, and based at least in part on the comparison 320 the band capability of electronic device 110-1 may be determined. Note that information 318 may have been previously determined by access point 116-1 (such as based at least in part on previous communication between electronic device 110-1 and access point 116-1) and/or may have been previously received from computer 112.

For example, information 314 may include or may specify an operating class of electronic device 110-1, a model of electronic device 110-1 or a vendor that provides or manufactures electronic device 110-1. This information may directly or indirectly specify a band capability of electronic device 110-1, such as whether or not electronic device 110-1 has the multi-band capability.

In some embodiments, the operating class of electronic device 110-1 may include one or more channels that electronic device 110-1 is capable of using. Because these channels are located in one or more bands of frequencies, the operating class may specify whether or not the electronic device 110-1 has the multi-band capability.

Alternatively or additionally, the model of electronic device 110-1 may (or may not) have the multi-band capability. In some embodiments, the vendor may only provide or manufacture electronic devices that have the multi-band capability.

After the determination, interface circuit 312 may provide, to computer 112, information 322 specifying whether or not electronic device 110-1 has the multi-band capability. After receiving information 322, computer 112 may provide information 322 to one or more other access points or computer-network devices.

Alternatively or additionally, when electronic device 110-1 has the multi-band capability, interface circuit 312 may selectively provide a transition recommendation (TR) 324 to electronic device 110-1, such as a recommendation that electronic device 110-1 transition from a first band of frequencies to a second band of frequencies, from a first channel in a band of frequencies to a second channel in the band of frequencies, or to a second access point. For example, the transition recommendation may be based at least in part on measured or estimated communication performance (such as throughput) of electronic device 110-1 in the first band of frequencies, the second band of frequencies, the first channel, the second channel and/or the second access point. In some embodiments, the transition recommendation may be based at least in part on loading of access point 110-1 and/or the second access point in the first band of frequencies and/or the second band of frequencies.

While FIG. 3 illustrates communication between components using unidirectional or bidirectional communication with lines having single arrows or double arrows, in general the communication in a given operation in this figure may involve unidirectional or bidirectional communication. Moreover, while FIG. 3 illustrates operations being performed sequentially or at different times, in other embodiments at least some of these operations may, at least in part, be performed concurrently or in parallel.

We now further describe the communication techniques. In the communication techniques, one or more pieces of information may be used by an access point to determine whether a client is multi-band capable (e.g., is capable of operating in more than one band of frequencies) without matching MAC addresses. For example, in some embodiments, the access point may use information in a supported operating classes information element in an association request frame. This information element may include an alternate operating classes field that indicates which bands of frequencies and which channels within the bands of frequencies the client can operate. If a client indicates in this field that it is capable of operating in a different band of frequencies than the one it associated in with the access point, then the access point may know that the client was multi-band capable and selectively steer the client between bands of frequencies.

Alternatively or additionally, some clients may not include this information element, but they may be from a vendor that only makes multi-band electronic devices. By identifying that a client is from such a vendor, the access point may determine that this client is multi-band capable. For example, Apple (of Cupertino, California) only makes multi-band electronic devices. Furthermore, electronic devices from Apple transmit association requests that include an Apple vendor-specific information element, which typically includes an organizationally unique identifier of 00:17:f2. When the access point sees an association request with this particular vendor-specific information element it knows that this association request came from an Apple product and, therefore, it knows that this electronic device is multi-band capable and can be selectively steered between the bands of frequencies.

We now describe embodiments of an electronic device, which may perform at least some of the operations in the communication techniques. FIG. 4 presents a block diagram illustrating an example of an electronic device 400 in accordance with some embodiments, such as one of: base station 108, one of electronic devices 110, computer 112, one of access points 116, one of radio nodes 118 or switch 128. This electronic device includes processing subsystem 410, memory subsystem 412, and networking subsystem 414. Processing subsystem 410 includes one or more devices configured to perform computational operations. For example, processing subsystem 410 can include one or more microprocessors, graphics processing units (GPUs), ASICs, microcontrollers, programmable-logic devices, and/or one or more digital signal processors (DSPs).

Memory subsystem 412 includes one or more devices for storing data and/or instructions for processing subsystem 410 and networking subsystem 414. For example, memory subsystem 412 can include DRAM, static random access memory (SRAM), and/or other types of memory. In some embodiments, instructions for processing subsystem 410 in memory subsystem 412 include: one or more program modules or sets of instructions (such as program instructions 422 or operating system 424, such as Linux, UNIX, Windows Server, or another customized and proprietary operating system), which may be executed by processing subsystem 410. Note that the one or more computer programs, program modules or instructions may constitute a computer-program mechanism. Moreover, instructions in the various modules in memory subsystem 412 may be implemented in: a high-level procedural language, an object-oriented programming language, and/or in an assembly or machine language. Furthermore, the programming language may be compiled or interpreted, e.g., configurable or configured (which may be used interchangeably in this discussion), to be executed by processing subsystem 410.

In addition, memory subsystem 412 can include mechanisms for controlling access to the memory. In some embodiments, memory subsystem 412 includes a memory hierarchy that comprises one or more caches coupled to a memory in electronic device 400. In some of these embodiments, one or more of the caches is located in processing subsystem 410.

In some embodiments, memory subsystem 412 is coupled to one or more high-capacity mass-storage devices (not shown). For example, memory subsystem 412 can be coupled to a magnetic or optical drive, a solid-state drive, or another type of mass-storage device. In these embodiments, memory subsystem 412 can be used by electronic device 400 as fast-access storage for often-used data, while the mass-storage device is used to store less frequently used data.

Networking subsystem 414 includes one or more devices configured to couple to and communicate on a wired and/or wireless network (i.e., to perform network operations), including: control logic 416, an interface circuit 418 and one or more antennas 420 (or antenna elements). (While FIG. 4 includes one or more antennas 420, in some embodiments electronic device 400 includes one or more nodes, such as antenna nodes 408, e.g., a metal pad or a connector, which can be coupled to the one or more antennas 420, or nodes 406, which can be coupled to a wired or optical connection or link. Thus, electronic device 400 may or may not include the one or more antennas 420. Note that the one or more nodes 406 and/or antenna nodes 408 may constitute input(s) to and/or output(s) from electronic device 400.) For example, networking subsystem 414 can include a Bluetooth^{™} networking system, a cellular networking system (e.g., a 3G/4G/5G network such as UMTS, LTE, etc.), a universal serial bus (USB) networking system, a coaxial interface, a High-Definition Multimedia Interface (HDMI) interface, a networking system based on the standards described in IEEE 802.11 (e.g., a Wi-Fi^{®} networking system), an Ethernet networking system, and/or another networking system.

Note that a transmit or receive antenna pattern (or antenna radiation pattern) of electronic device 400 may be adapted or changed using pattern shapers (such as directors or reflectors) and/or one or more antennas 420 (or antenna elements), which can be independently and selectively electrically coupled to ground to steer the transmit antenna pattern in different directions. Thus, if one or more antennas 420 include N antenna pattern shapers, the one or more antennas may have 2^{N} different antenna pattern configurations. More generally, a given antenna pattern may include amplitudes and/or phases of signals that specify a direction of the main or primary lobe of the given antenna pattern, as well as so-called 'exclusion regions' or 'exclusion zones' (which are sometimes referred to as 'notches' or 'nulls'). Note that an exclusion zone of the given antenna pattern includes a low-intensity region of the given antenna pattern. While the intensity is not necessarily zero in the exclusion zone, it may be below a threshold, such as 3dB or lower than the peak gain of the given antenna pattern. Thus, the given antenna pattern may include a local maximum (e.g., a primary beam) that directs gain in the direction of electronic device 400 that is of interest, and one or more local minima that reduce gain in the direction of other electronic devices that are not of interest. In this way, the given antenna pattern may be selected so that communication that is undesirable (such as with the other electronic devices) is avoided to reduce or eliminate adverse effects, such as interference or crosstalk.

Networking subsystem 414 includes processors, controllers, radios/antennas, sockets/plugs, and/or other devices used for coupling to, communicating on, and handling data and events for each supported networking system. Note that mechanisms used for coupling to, communicating on, and handling data and events on the network for each network system are sometimes collectively referred to as a 'network interface' for the network system. Moreover, in some embodiments a 'network' or a 'connection' between the electronic devices does not yet exist. Therefore, electronic device 400 may use the mechanisms in networking subsystem 414 for performing simple wireless communication between the electronic devices, e.g., transmitting advertising or beacon frames and/or scanning for advertising frames transmitted by other electronic devices as described previously.

Within electronic device 400, processing subsystem 410, memory subsystem 412, and networking subsystem 414 are coupled together using bus 428. Bus 428 may include an electrical, optical, and/or electro-optical connection that the subsystems can use to communicate commands and data among one another. Although only one bus 428 is shown for clarity, different embodiments can include a different number or configuration of electrical, optical, and/or electro-optical connections among the subsystems.

In some embodiments, electronic device 400 includes a display subsystem 426 for displaying information on a display, which may include a display driver and the display, such as a liquid-crystal display, a multi-touch touchscreen, etc.

Moreover, electronic device 400 may include a user-interface subsystem 430, such as: a mouse, a keyboard, a trackpad, a stylus, a voice-recognition interface, and/or another human-machine interface. In some embodiments, user-interface subsystem 430 may include or may interact with a touch-sensitive display in display subsystem 426.

Electronic device 400 can be (or can be included in) any electronic device with at least one network interface. For example, electronic device 400 can be (or can be included in): a desktop computer, a laptop computer, a subnotebook/netbook, a server, a tablet computer, a cloud-based computing system, a smartphone, a cellular telephone, a smartwatch, a wearable electronic device, a consumer-electronic device, a portable computing device, an access point, a transceiver, a router, a switch, communication equipment, an eNodeB, a controller, test equipment, and/or another electronic device.

Although specific components are used to describe electronic device 400, in alternative embodiments, different components and/or subsystems may be present in electronic device 400. For example, electronic device 400 may include one or more additional processing subsystems, memory subsystems, networking subsystems, and/or display subsystems. Additionally, one or more of the subsystems may not be present in electronic device 400. Moreover, in some embodiments, electronic device 400 may include one or more additional subsystems that are not shown in FIG. 4. Also, although separate subsystems are shown in FIG. 4, in some embodiments some or all of a given subsystem or component can be integrated into one or more of the other subsystems or component(s) in electronic device 400. For example, in some embodiments instructions 422 is included in operating system 424 and/or control logic 416 is included in interface circuit 418.

Moreover, the circuits and components in electronic device 400 may be implemented using any combination of analog and/or digital circuitry, including: bipolar, PMOS and/or NMOS gates or transistors. Furthermore, signals in these embodiments may include digital signals that have approximately discrete values and/or analog signals that have continuous values. Additionally, components and circuits may be single-ended or differential, and power supplies may be unipolar or bipolar.

An integrated circuit (which is sometimes referred to as a 'communication circuit') may implement some or all of the functionality of networking subsystem 414 and/or of electronic device 400. The integrated circuit may include hardware and/or software mechanisms that are used for transmitting wireless signals from electronic device 400 and receiving signals at electronic device 400 from other electronic devices. Aside from the mechanisms herein described, radios are generally known in the art and hence are not described in detail. In general, networking subsystem 414 and/or the integrated circuit can include any number of radios. Note that the radios in multiple-radio embodiments function in a similar way to the described single-radio embodiments.

In some embodiments, networking subsystem 414 and/or the integrated circuit include a configuration mechanism (such as one or more hardware and/or software mechanisms) that configures the radio(s) to transmit and/or receive on a given communication channel (e.g., a given carrier frequency). For example, in some embodiments, the configuration mechanism can be used to switch the radio from monitoring and/or transmitting on a given communication channel to monitoring and/or transmitting on a different communication channel. (Note that 'monitoring' as used herein comprises receiving signals from other electronic devices and possibly performing one or more processing operations on the received signals)

In some embodiments, an output of a process for designing the integrated circuit, or a portion of the integrated circuit, which includes one or more of the circuits described herein may be a computer-readable medium such as, for example, a magnetic tape or an optical or magnetic disk. The computer-readable medium may be encoded with data structures or other information describing circuitry that may be physically instantiated as the integrated circuit or the portion of the integrated circuit. Although various formats may be used for such encoding, these data structures are commonly written in: Caltech Intermediate Format (CIF), Calma GDS II Stream Format (GDSII) or Electronic Design Interchange Format (EDIF), OpenAccess (OA), or Open Artwork System Interchange Standard (OASIS). Those of skill in the art of integrated circuit design can develop such data structures from schematics of the type detailed above and the corresponding descriptions and encode the data structures on the computer-readable medium. Those of skill in the art of integrated circuit fabrication can use such encoded data to fabricate integrated circuits that include one or more of the circuits described herein.

While the preceding discussion used Wi-Fi, LTE and/or Ethernet communication protocols as illustrative examples, in other embodiments a wide variety of communication protocols and, more generally, communication techniques may be used. Thus, the communication techniques may be used in a variety of network interfaces. Furthermore, while some of the operations in the preceding embodiments were implemented in hardware or software, in general the operations in the preceding embodiments can be implemented in a wide variety of configurations and architectures. Therefore, some or all of the operations in the preceding embodiments may be performed in hardware, in software or both. For example, at least some of the operations in the communication techniques may be implemented using program instructions 422, operating system 424 (such as a driver for interface circuit 418) or in firmware in interface circuit 418. Alternatively or additionally, at least some of the operations in the communication techniques may be implemented in a physical layer, such as hardware in interface circuit 418.

Note that the use of the phrases 'capable of,' 'capable to,' 'operable to,' or 'configured to' in one or more embodiments, refers to some apparatus, logic, hardware, and/or element designed in such a way to enable use of the apparatus, logic, hardware, and/or element in a specified manner.

While examples of numerical values are provided in the preceding discussion, in other embodiments different numerical values are used. Consequently, the numerical values provided are not intended to be limiting.

In the preceding description, we refer to 'some embodiments.' Note that 'some embodiments' describes a subset of all of the possible embodiments, but does not always specify the same subset of embodiments.

The foregoing description is intended to enable any person skilled in the art to make and use the disclosure, and is provided in the context of a particular application and its requirements. Moreover, the foregoing descriptions of embodiments of the present disclosure have been presented for purposes of illustration and description only. They are not intended to be exhaustive or to limit the present disclosure to the forms disclosed.

## Claims

1. An access point (116-1), comprising:
an interface circuit (418) configured to communicate with an electronic device (110-1), wherein the access point is configured to perform operations comprising:
receiving (210) a packet or a frame (310) associated with the electronic device; and
determining (212) whether the electronic device has multi-band capability based at least in part on information (314) included in the packet or the frame.

2. The access point of claim 1, wherein the determining that the electronic device has the multi-band capability is based at least in part on an operating class of the electronic device.

3. The access point of claim 2, wherein the determining that the electronic device has the multi-band capability is based at least in part on bands of frequencies associated with the operating class.

4. The access point of any one of claims 2-3, wherein the packet or the frame comprises an association request frame, and the association request frame comprises an operating classes information element that specifies the operating class.

5. The access point of claim 1, wherein the determining that the electronic device has the multi-band capability is based at least in part on a model of the electronic device that has a predefined or predetermined band capability.

6. The access point of claim 5, wherein the packet or the frame comprises an association request frame, and the association request frame comprises second information specifying the model.

7. The access point of claim 6, wherein the association request frame excludes an operating classes information element.

8. The access point of claim 1, wherein the determining that the electronic device has the multi-band capability is based at least in part on a vendor of the electronic device and predefined or predetermined band capabilities of models of electronic devices associated with the vendor.

9. The access point of claim 8, wherein the vendor only provides electronic devices having the multi-band capability.

10. The access point of any one of claims 8-9, wherein the packet or the frame comprises an association request frame, and the association request frame comprises an organizationally unique identifier information element specifying the vendor.

11. The access point of claim 10, wherein the association request frame excludes an operating classes information element.

12. The access point of any preceding claim, wherein the operations comprise selectively providing a transition recommendation (324) addressed to the electronic device based at least in part on the determined multi-band capability.

13. A non-transitory computer-readable storage medium (412) for use in conjunction with an access point (116-1), the computer-readable storage medium storing program instructions (422) that, when executed by the access point, cause the access point to perform operations comprising:
receiving (210) a packet or a frame (310) associated with an electronic device (110-1); and
determining (212) whether the electronic device has multi-band capability based at least in part on information (314) included in the packet or the frame.

14. A method (200) for determining whether an electronic device (110-1) has multi-band capability, comprising:
by an access point (116-1):
receiving (210) a packet or a frame (310) associated with the electronic device; and
determining (212) whether the electronic device has the multi-band capability based at least in part on information (314) included in the packet or the frame.

15. The method of claim 14, wherein the method comprises selectively providing a transition recommendation (324) addressed to the electronic device based at least in part on the determined multi-band capability.
